# EUROPEAN PATENT SPECIFICATION

(11) **EP 2 540 468 B1**
(45) Date of publication and mention of the grant of the patent: **20.04.2016**
(21) Application number: 12186218.9
(22) Date of filing: 28.07.2011
(51) Int. Cl.: B29C 33/00, B29C 45/27

(54) **Casting mold**
Gussform
Moule de coulée

(30) Priority: 30.07.2010 JP 2010173140
(43) Date of publication of application: 02.01.2013
(62) Divisional of application: 11175768.8
(73) Proprietor: Kabushiki Kaisha Toshiba, Minato-ku, Tokyo 105-8001 (JP)
(72) Inventor: Hirata, Daisuke, TOKYO, Tokyo 105-8001 (JP)
(74) Representative: Awapatent AB

(56) References cited:
- EP-A1- 0 206 545
- EP-A1- 0 539 109
- EP-A1- 0 736 245
- WO-A1-2007/140447
- DE-A1- 19 959 396
- DE-C1- 3 338 783
- JP-A- 3 225 930
- JP-A- 9 180 561
- JP-A- 57 203 532
- US-A- 2 672 653
- US-A- 4 370 511
- US-A- 4 629 160
- US-A- 6 002 085

## Description

### FIELD

Embodiments described herein relate generally to a casting mold used for casting using a thermosetting material and a gas insulated switchgear equipped with a cast product manufactured using the mold.

### BACKGROUND

A cast product made of epoxy resin is excellent in electric insulation and mechanical property as a solid insulator and therefore used as a structure insulator installed in high-voltage substation facilities such as, for example, a gas insulated switchgear and the like. In recent years, the cast product made of epoxy resin is required to be applied to higher-voltage power facilities while ensuring a long-term reliability as a solid insulator.

As a method of manufacturing the cast product made of epoxy resin, a pressure-gelation method or the like is used. In the pressure-gelation method, injection of the resin is started with the inside of a mold heated to the thermal curing temperature or higher of the resin to be injected into the mold, and an amount of the resin corresponding to a shrinkage volume of the resin during curing is continuously pressure-supplied until completion of filling of the resin into the mold cavity. The pressure-gelation method is capable of primary curing of the cast product in a short time and is therefore capable of mass-producing cast products with high quality and high reliability.

In these days, there is a tendency that a demand for a large quantity of products made of epoxy resin in a short delivery time arises due to expansion of overseas markets, and the aforementioned pressure-gelation method is required to be further improved. More specifically, the pressure-gelation method has an advantage of being able to manufacture one cast product in a short time but has a limitation in process such as continuous pressure-supply of the thermosetting casting material whose temperature is difficult to control. Therefore, in the pressure-gelation method, one-cavity casting of a cast product by one mold is general.

On the other hand, in a general casting method not employing the pressure-gelation method, multi-cavity casting of cast products by one mold is possible, but a lot of time, for example, over ten hours is sometimes required for temporary curing depending on the size of the cast products. Consequently, the general casting method cannot decrease the casting time per cast product and is not adequate for mass production.

Concretely, in a gas-insulated switchgear of specifications of a rated voltage, for example, exceeding 145 kV, a number of solid insulators made of epoxy resin will be used. On the assumption of supply of insulating parts to such an apparatus, the casting method employing the former pressure-gelation method as well as the latter general casting method has a problem in terms of production capacity.
The disclosures of the following documents form part of the state of the art. US 2672653 A discloses an injection mold for molding grommets, terminals, spark plug insulators or the like on electric conductors. JP 57203532 A discloses a mold for molding thermosetting resin. EP 0206545 A1 discloses a method and an apparatus for recoating optical waveguide fibers. DE 19959396 A1 discloses molds for plastic lenses of vehicle lights. WO 2007140447 A1 discloses a method and an apparatus for controlling the delivery of polymer material in a sequential injection molding process.

### BRIEF DESCRIPTION OF THE DRAWINGS

Fig. 1 is a view illustrating the structure of a gas insulated switchgear according to a first embodiment which is not in accordance with the invention.
Fig. 2 is a view illustrating the structure of a connecting busbar included in the gas insulated switchgear in Fig. 1.
Fig. 3 is a cross-sectional view illustrating the structure of a post-shaped insulating spacer provided at the connecting busbar in Fig. 2.
Fig. 4 is a cross-sectional view of a casting mold of this embodiment used for manufacturing the insulating spacer in Fig. 3, as seen from a direction along a parting surface.
Fig. 5 is a cross-sectional view of the casting mold in Fig. 4, as seen from a direction facing the parting surface.
Fig. 6A is a cross-sectional view illustrating a state that injection of a casting material into a material injection port of the casting mold in Fig. 5 is started.
Fig. 6B is a cross-sectional view illustrating a state that the casting material has been injected into a first-order runner of the casting mold in Fig. 6A.
Fig. 6C is a cross-sectional view illustrating a state that the casting material has been injected into second-order runners of the casting mold in Fig. 6B.
Fig. 6D is a cross-sectional view illustrating a state that the casting material has been filled in cavity parts of the casting mold in Fig. 6C.
Fig. 7 is a cross-sectional view illustrating the structure of a casting mold according to a second embodiment which is not in accordance with the invention.
Fig. 8 is a cross-sectional view illustrating the structure of a casting mold according to a third embodiment which is not in accordance with the invention.
Fig. 9A is a cross-sectional view illustrating a state that a stop valve is opened in an air exhaust mechanism included in the casting mold in Fig. 8.
Fig. 9B is a cross-sectional view illustrating a closed state of the stop valve in the air exhaust mechanism in Fig. 9A.
Fig. 10 is a cross-sectional view illustrating the structure of a casting mold in which the structure of the second embodiment is incorporated in the casting mold in Fig. 8.
Fig. 11 is a cross-sectional view illustrating the structure of a casting mold according to a fourth embodiment.
Fig. 12 is an exploded perspective view illustrating the structure of inserts included in the casting mold in Fig. 11.
Fig. 13 is a cross-sectional view illustrating the structure of a casting mold in which the structure of the third embodiment is incorporated in the casting mold in Fig. 11.

### DETAILED DESCRIPTION

In one embodiment, a casting mold includes: a mold body including, at a bottom portion thereof, a material injection port for injecting a thermosetting casting material under pressure; and a plurality of cavity parts formed such that positions thereof in a height direction in the mold body are aligned with each other, and respectively filled with the casting material injected from the material injection port at the bottom portion of the mold body. It is possible to stabilize the quality of cast products using a thermosetting material while increasing productivity.

Hereinafter, embodiments will be described based on the drawings.

### (First Embodiment)

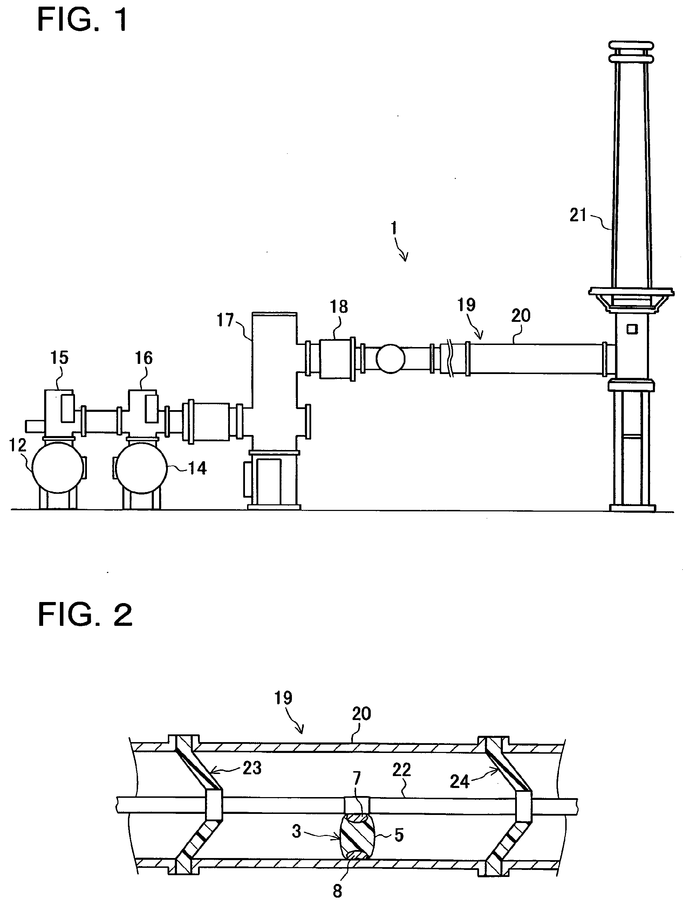

As illustrated in Fig. 1, a gas insulated switchgear (GIS) 1 according to a first embodiment (not in accordance with the invention) is structured as switching facilities including main busbars 12, 14 and a bushing 21 and having disconnecting switches 15, 16, a circuit breaker 17, a current transformer 18, a connecting busbar 19 and so on housed in a ground container filled with sulfur hexafluoride (SF₆) gas. When shutting off the electric current, the circuit breaker 17 sprays the sulfur hexafluoride gas having high insulation between electrodes performing arc discharge of a switch to extinguish the discharge.

As illustrated in Fig. 2, the connecting busbar 19 is structured in a manner that a high-voltage conductor 22 for conducting current is housed in a connecting container 20 at the ground potential. The high-voltage conductor 22 is supported in the connecting container 20 via cone-shaped (conical) insulating spacers 23, 24 and a post-shaped (pillar-shaped) insulating spacer 3. The cone-shaped insulating spacers 23, 24 support the high-voltage conductor 22 while separating the sulfur hexafluoride gas in the connecting container 20.

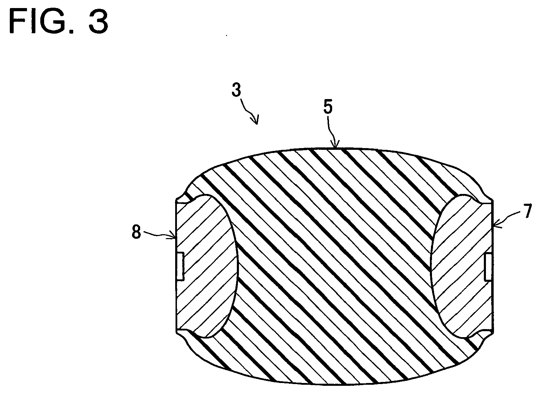

The structure of the post-shaped insulating spacer 3 will be described here. As illustrated in Fig. 2, Fig. 3, the post-shaped insulating spacer 3 is composed of a cast product in which a spacer body part 5 made of epoxy resin and a pair of embedded metal fittings 7, 8 being embedded members made of metal are integrally molded. The spacer body part 5 having electrical insulation is formed in a barrel shape bulging out at a middle portion of a pillar.

As illustrated in Fig. 2, Fig. 3, the pair of embedded metal fittings 7, 8 are provided at end portions of the spacer body part 5 respectively. As illustrated in Fig. 2, one embedded metal fitting 7 is mechanically coupled to the high-voltage conductor 22 and the other embedded metal fitting 8 is mechanically coupled to an inner portion of the connecting container 20. Thus, the insulating spacer 3 supports the high-voltage conductor 22 on an inner wall surface of the connecting container 20 from the bottom side of the high-voltage conductor 22 with the axial direction of the insulating spacer 3 standing up.

As the material of the spacer body part 5, an epoxy resin being a thermosetting casting material is employed. More specifically, used as the epoxy resin is a composition made by mixing an acid anhydride-based curing agent and alumina as an inorganic filler into a liquid bisphenol A-based epoxy resin.

Note that on a bulging peripheral surface of the spacer body part 5, a rugged portion constituting a plurality of steps in the shape of stairs from its middle portion toward each end portion in the axial direction of the insulating spacer 3. This rugged portion is formed to roughen the surface of the spacer body part 5 on an order of, for example, several microns. Thus, the rugged portion functions to inhibit motion of electrons to suppress the electrostatic charge of the spacer body part 5 itself.

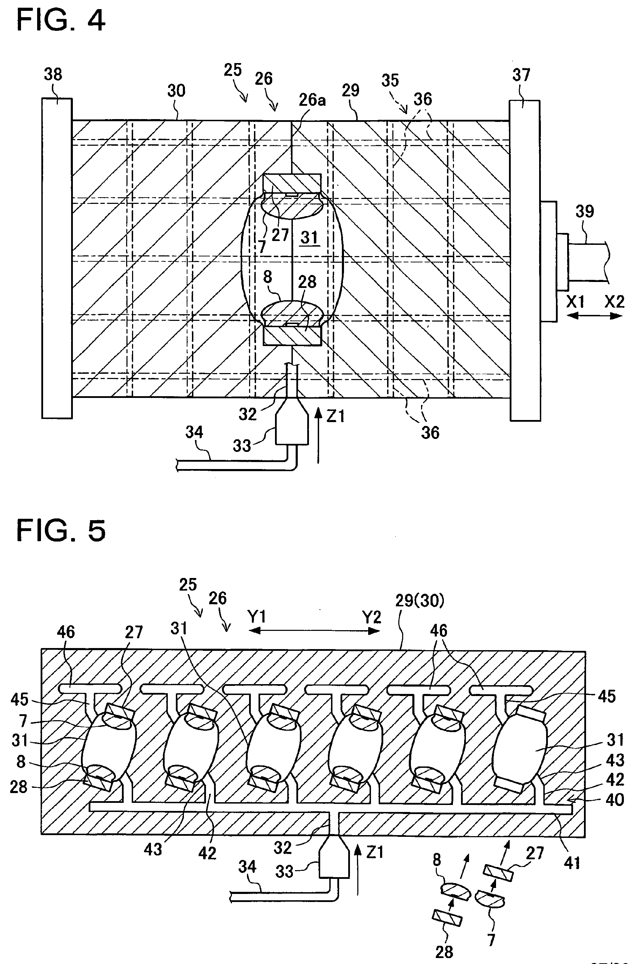

Next, the structure of a casting mold 25 for manufacturing (casting) the post-shaped insulating spacer 3 will be described. As illustrated in Fig. 4, Fig. 5, the casting mold 25 includes a mold body 26 having a fixed mold part 30 and a movable mold part 29 movable in an arrow X1-X2 direction, mold fixing plates 37,38 on which the movable mold part 29 and the fixed mold part 30 are fixed respectively, and inserts 27, 28 installed in the respective movable mold part 29 and fixed mold part 30.

Here, the casting mold 25 of this embodiment is a mold of the specifications for multi-cavity (six-cavity in this embodiment) casting of insulating spacers 3 as cast products while employing a so-called pressure-gelation method. In other words, in the mold body 26 composed of the movable mold part 29 and the fixed mold part 30 of the casting mold 25, a material injection port 32, a plurality of cavity parts (mold cavities) 31, a runner part 40 and material reservoirs 46 and so on are formed.

The material injection port 32 is a sprue (a pouring gate) provided at the bottom portion of the mold body 26 for injecting the thermosetting casting material under pressure from the outside of the mold body 26 into the mold body 26. The cavity parts 31 are composed of recessed portions (hollow portions) corresponding to the shapes of products respectively. The runner part 40 constitutes transfer paths for the casting material leading from the material injection port 32 to the individual cavity parts 31.

The material reservoirs 46 are formed on the upper side of the cavity parts 31 respectively and house the casting material pushed out from the cavity parts 31 side when the casting material is filled into the cavity parts 31. Further, the material reservoirs 46 house air remaining in the cavity parts 31 (air causing occurrence of voids) pushed out from the inside of the cavity parts 31 together with the casting material. Further, inside the mold body 26, relay paths 45 coupling the material reservoirs 46 and the cavity parts 31 and so on are provided.

Note that each of the cavity parts 31 is structured in a shape capable of providing, as a cast product, a spacer body part 5 having a size, for example, larger than 7000 cc(cm³) in volume and 170 mm in maximum thickness by thermally curing the casting material filled therein.

As illustrated in Fig. 4, Fig. 5, to the mold fixing plate 37 fixing the movable mold part 29, for example, a hydraulic cylinder 39 is coupled. This cylinder 39 opens and closes the casting mold 25 by moving backward and forward the movable mold part 29 together with the mold fixing plate 37 from and to the fixed mold part 30. Further, at the bottom portion of the mold body 26 in the casting mold 25, a material injection nozzle 33 for injecting (filling), via the material injection port 32, the casting material transferred via a material transfer pipe 34 into the cavity parts 31 of the mold body 26.

A cylinder mechanism including a piston for pressure-supplying liquid epoxy resin being the thermosetting casting material via the material inspection nozzle 33 and the material injection port 32 to the inside of the cavity parts 31 of the mold body 26 and the like are connected to the base portion side of the above-described material transfer pipe 34.

Further, a heating mechanism 36 including a temperature sensor disposed near the cavity parts 31 and a plurality of bar-shaped heaters 35 capable of controlling temperature is provided in the casting mold 25 of this embodiment. The above-described heaters 35 are built-in in a manner that they are arranged in a lattice form in the mold body 26 composed of the movable mold part 29 and the fixed mold part 30. This heating mechanism 36 heats (heat-controls) the mold body 26 so that the heating temperature becomes higher from the bottom portion to the upper portion of the mold body 26.

Specifically, when the insulating spacers 3 are cast, the heating mechanism 36 heats a portion near the material injection port 32 lower than the cavity parts 31 in the mold body 26 illustrated in Fig. 4, Fig. 5 to, for example, about 110 to 120°C, while heating an upper portion including the formation portion of the cavity parts 31 in the mold body 26 illustrated in Fig. 4, Fig. 5 to, for example, about 130 to 140°C.

In other words, when the insulating spacers 3 are cast, the heating mechanism 36 controls the temperature inside the mold body 26 with a temperature gradient so that the temperature near the material injection port 32 is lower, for example, by about 10 to 20°C than, for example, the upper portion including the formation portion of the cavity parts 31 in the mold body 26. This is to suppress that the casting material near the material injection port 32 is thermally cured earlier than other portions during transition of casting.

Further, the structure of the casting mold 25 of this embodiment will be described. As illustrated in Fig. 5, the runner part 40 includes a first-order runner 41 divided into two branches, from an upper end portion of the material injection port 32, each extending in the horizontal direction (an arrow Y1-Y2 direction), and second-order runners 42 each extending in a direction (an arrow Z1 direction) from a middle portion of the first-order runner 41 toward the cavity part 31. Dead end (upper end) portions of the second-order runners 42 are structured as gates 43 and open in the cavity parts 31 respectively.

Here, the individual cavity parts 31 are formed in a manner that positions thereof in the height direction (the arrow Z1 direction) in the mold body 26 are aligned with each other as illustrated in Fig. 5. In other words, the cavity parts 31 are arranged to be regularly disposed side by side along the horizontal direction (the arrow Y1-Y2 direction) in the mold body 26. Accordingly, the casting material to be supplied into the first-order runner 41 through the material injection port 32 is filled in the whole first-order runner 41, then moves up in the arrow Z1 direction in the second-order runners 42 against its self-weight, and is filled in the individual cavity parts 31 at substantially the same time. This can suppress variations in heating time for the casting material in the individual cavity parts 31, thereby uniformizing various characteristics including electric insulation and mechanical property of the cast products (the insulating spacers 3) obtained by multi-cavity casting which have been respectively thermally cured.

Further, the runner part 40 and the cavity parts 31 are structured to be laid out substantially symmetrically (on the right side and the left side in Fig. 5) about the position of the material injection port 32 in the mold body 26. This makes it possible to make the transfer times of the casting material transferred in the first-order runner 41 and the second-order runners 42 of the runner part 40 (or the heating times after filled in the cavity parts 31) the same on the right side and left side of the material injection port 32, thereby suppressing variations in various characteristics between the (three) cast products cast on the right side in Fig. 5 and the (three) cast products cast on the left side in Fig. 5.

Note that the cavity parts 31 are structured so that each of the cast products is cast in an inclined state as illustrated in Fig. 5. This structure is intended to prevent the flow of the casting material from being inhibited by the physical interference of the embedded metal fittings 7, 8 installed inside the cavity parts 31. This makes it easier to push out the air remaining in the cavity parts 31 together with excessive casting material, thus making it possible to suppress occurrence of voids during the filling of the casting material into the cavity parts 31.

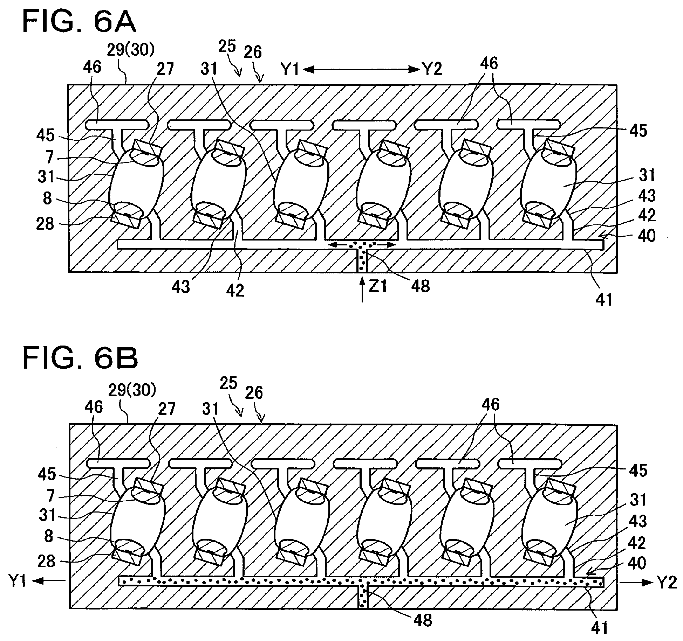

Next, a method of manufacturing the insulating spacers 3 using the casting mold structure as described above will be described based on Fig. 6A to Fig. 6D in addition to aforementioned Fig. 3 to Fig. 5. As exemplified in Fig. 5, the embedded metal fittings 7, 8 are installed first in the inserts 27, 28 with O-rings or the like interposed therebetween. Then, the inserts 27,28 to which the embedded metal fittings 7, 8 are attached are set (installed) in a mold part on the side which has been determined in advance of the mold body 26, namely, one of the movable mold part 29 and the fixed mold part 30.

Subsequently, after the casting mold 25 in which the inserts 27,28 have been set is closed via the cylinder 39 such that parting surfaces 26a of the movable mold part 29 and the fixed mold part 30 come into contact as illustrated in Fig. 4, the inside of the mold body 26 in the casting mold 25 is heated. In this event, the temperature is adjusted through the heating mechanism 36 so that a portion except the portion near (around) the material injection port 32 is heated to 135°C and the portion near the material injection port 32 is heated to 125°C lower by 10°C in the mold body 26 illustrated in Fig. 4. Such temperature adjustment is performed to suppress the thermal cure of a casting material 48 at the material injection port 32.

Subsequently, the mold body 26 is evacuated, for example, and the inside of the mold body 26 is adjusted to the above-described heating temperature, and then injection of the thermosetting casting material 48 (the liquid epoxy resin) into the material injection port 32 is started as illustrated in Fig. 6A at an injection rate of 50 cc(cm³)/sec from the material injection nozzle 33.

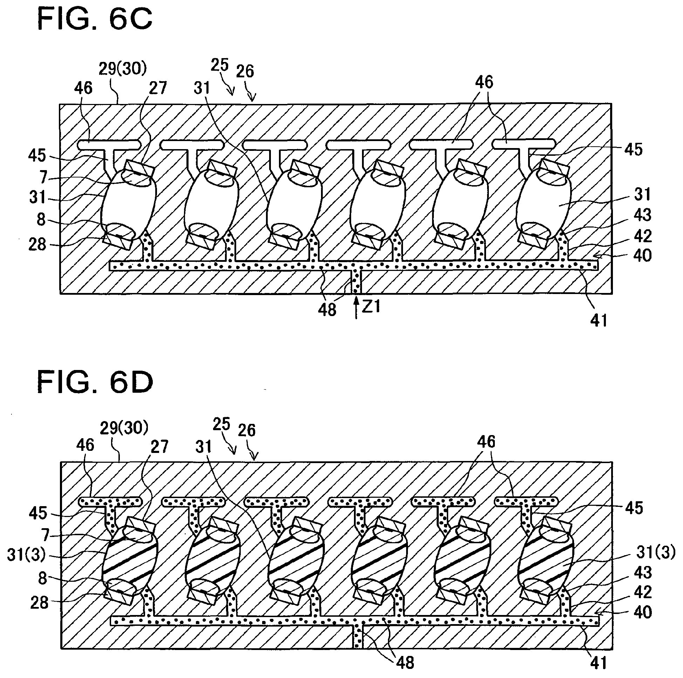

Thereafter, as illustrated in Fig. 6A, the casting material 48 is divided from the upper end portion of the material injection port 32 into two branches along the first-order runner 41 extending in the horizontal direction (the arrow Y1-Y2 direction). The casting material 48 is then filled in the whole first-order runner 41 as illustrated in Fig. 6B. Further, the casting material 48 then moves up in the arrow Z1 direction against its self-weight in the second-order runners 42 extending in the vertical direction as illustrated in Fig. 6C. Further, the casting material 48 is filled in the individual cavity parts 31 at substantially the same time via the gates 43 as illustrated in Fig. 6D.

In this event, the cylinder mechanism including the piston provided at the base end side of the material transfer pipe 34 and the like are controlled, whereby the casting material 48 is pressure-supplied into the cavity parts 31 of the heated mold body 26 in a manner to compensate for a compressed volume during the cure of the resin by cross linking reaction. By such pressure-supply (refilling under pressure) of the casting material 48, outer peripheral portions of the casting material 48 in the cavity parts 31 of the mold body 26 are thermally cured into semi-cured matters as illustrated in Fig. 6D. Further, by continuing the pressure-supply of the casting material 48, reaction heat during the cross-linking reaction generated when the thermal cure of the semi-cured matters obtained in the mold body 26 proceeds toward central portions thereof causes the semi-cured matters internally to generate heat from the central portions thereof.

Then, the pressure-supply of the casting material 48 is stopped, the semi-cured matters are then taken out (released) of the cavity parts 31 of the mold body 26, and the inserts 27,28 are removed from the semi-cured matters. Subsequently, the semi-cured matters taken out of the mold body 26 are left stand, for example, for about 30 minutes, whereby the internal heat generation of the semi-cured matters is continued to thermally cure the whole semi-cured matters including the central portions. Thus, the post-shaped insulating spacers (cast products) 3 having a final physical property as solid insulators such as high heat resistance property or the like are obtained as illustrated in Fig. 3.

As has been described, in the casting mold 25 of this embodiment, the individual cavity parts 31 are formed in a manner that the positions thereof in the height direction (the arrow Z1 direction) in the mold body 26 are aligned with each other as illustrated in Fig. 5, Fig. 6B to Fig. 6D. Therefore, it becomes possible to fill the casting material to the cavity parts 31 at substantially the same time. Therefore, the casting mold 25 makes it possible to make the heating periods of the casting material in the cavity parts 31 substantially the same. As a result, various characteristics including the mechanical strength, the heat resistance, the electric insulation of the thermally cured cast products (the insulating spacers 3) obtained by multi-cavity casting can be made uniform. This ensures that the insulating spacers 3 can be manufactured with a stable quality and the productivity can be improved.

Further, in the casting mold 25, the cavity parts 31 are arranged in a manner that the positions thereof in the height direction in the mold body 26 are aligned with each other as described above. Therefore, it becomes possible to stabilize various characteristics of the cast products by a comparatively easy temperature control such as control of the heating temperature only in the vertical direction of the mold body 26. Further, by applying the post-shaped insulating spacer 3 which is stabilized in quality as a solid insulator to the supporting portion of the high-voltage conductor 22 as illustrated in Fig. 1, Fig. 2, the reliability of the insulation of the gas insulated switchgear 1 can be increased.

### (Second Embodiment)

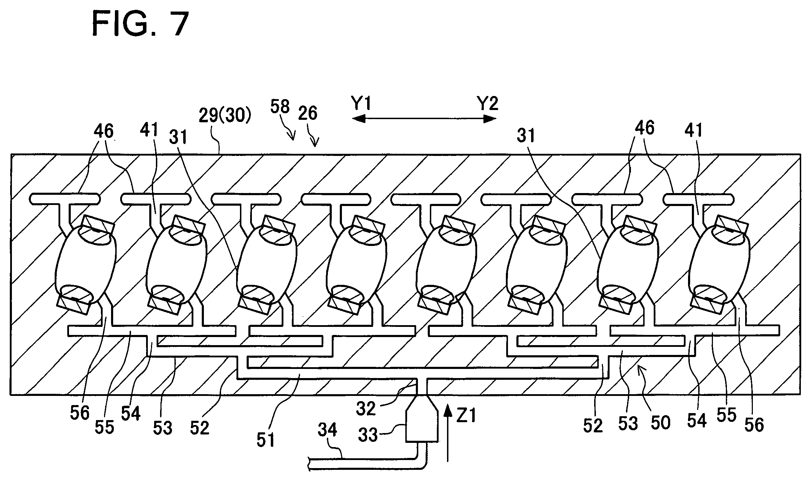

A second embodiment (not in accordance with the invention) will be described based on Fig. 7. Note that components in Fig. 7 which are the same as those in Fig. 5 described in the first embodiment are given the same numbers and description thereof will be omitted.

As illustrated in Fig. 7, a casting mold 58 of this embodiment is a mold capable of eight-cavity casting of cast products, and includes a runner part 50 in place of the runner part 40 provided in the casting mold 25 for six-cavity casting of cast products in the first embodiment. This runner part 50 is formed to constitute transfer paths for the casting material leading from a material injection port 32 to individual cavity parts 31 and in a manner that the lengths of the transfer paths are equal.

More specifically, the runner part 50 includes first-order to six-order runners 51 to 56. The first-order runner 51 is divided into two branches, from an upper end portion of the material injection port 32, each extending in the horizontal direction (an arrow Y1-Y2 direction). The second-order runners 52 each extends in a direction of an upper side of the casting mold 58 (an arrow Z1 direction) from each of end portions of the first-order runner 51. The third-order runner 53 is divided into two branches, from an upper end portion of each of the two second-order runners 52, each extending in the horizontal direction.

The fourth-order runner 54 extends in the direction of the upper side of the casting mold 58 from each of end portions of the third-order runners 53. The fifth-order runner 55 is divided into two branches, from an upper end portion of each of the four fourth-order runners 54, each extending in the horizontal direction. The six-order runner 56 has the same structure as that of the second-order runner 42 in the first embodiment

More specifically, the runner part 50 and the cavity parts 31 are laid out in a substantially symmetrically (on the right side and the left side in Fig. 7) about the position of the material injection port 32 in the mold body 26. In the runner part 50 divided in a stepped manner such as two, four, eight branches as described above, the path lengths of the transfer paths for the casting material leading from the material injection port 32 to the individual cavity parts 31 are equal to each other.

Accordingly, the casting mold 58 of this embodiment makes it possible to uniformize the heating periods of the casting material in the cavity parts 31 as in the first embodiment and also equalize the transfer times (heating times) of the casting material reaching the cavity parts 31 from the material injection port 32. Thus, the casting mold 58 can suppress variations in various characteristics among the thermally cured cast products obtained by multi-cavity casting.

### (Third Embodiment)

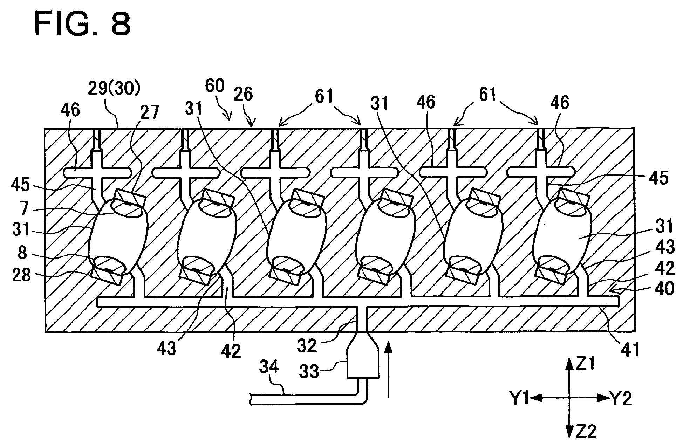

Next, a third embodiment (not in accordance with the invention) will be described based on Fig. 8 to Fig. 10. Note that components in Fig. 8 to Fig. 10 which are the same as those in Fig. 5, Fig. 7 described in the first and second embodiments are given the same numbers and description thereof will be omitted.

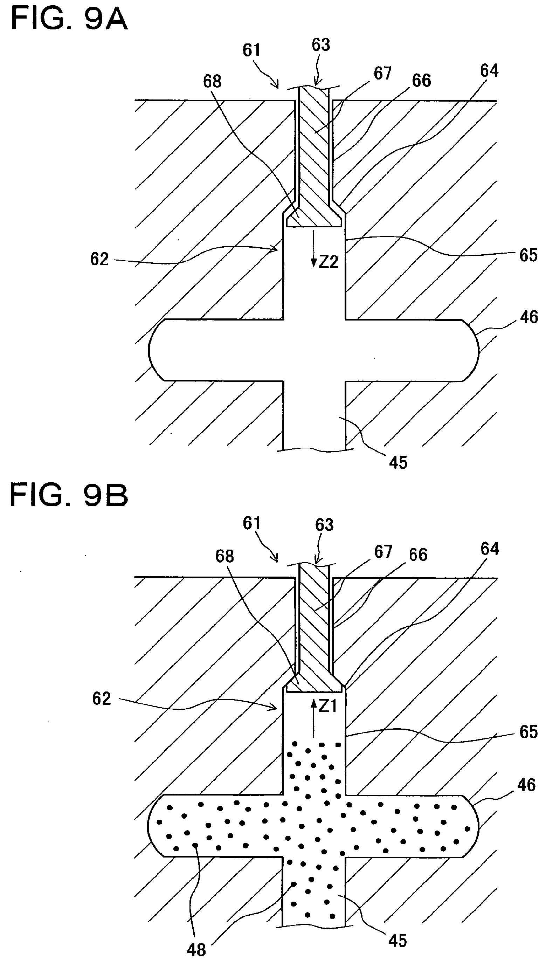

As illustrated in Fig. 8, Fig. 9A and Fig. 9B, a casting mold 60 of this embodiment further includes an air exhaust mechanism 61 in addition to the structure of the casting mold 25 according to the first embodiment The air exhaust mechanism 61 has a plurality of air exhaust holes 62 leading from individual cavity parts 31 to the outside of a mold body 26 and a plurality of stop valves 63 as valve members closing the plurality of air exhaust holes 62 respectively accompanying filling of the casting material into the cavity parts 31.

Specifically, the air exhaust holes 62, as illustrated in Fig. 8, Fig. 9A and Fig. 9B, are structured as stepped holes opening from individual material reservoirs 46 into the outside of the mold body 26 and have inclined surfaces 64 at middle portions thereof. The air exhaust hole 62 is composed of, as illustrated in Fig. 9A and Fig. 9B, a large-diameter hole part 65 on the material reservoir 46 side (a bottom portion side) and a small-diameter hole part 66 on an upper portion side opening to the outside of the mold body 26. On the other hand, the stop valve 63 includes a shaft part 67 extending in the vertical direction (an arrow Z1-Z2 direction) and a conical part 68 provided at the lower end of the shaft part 67.

As illustrated in Fig. 9A, Fig. 9B, the shaft part 67 of the stop valve 63 is formed having a diameter smaller than the small-diameter hole part 66 of the air exhaust hole 62 and inserted in the small-diameter hole part 66. In other words, between the small-diameter hole part 66 and the shaft part 67, a predetermined space (clearance) is formed. On the other hand, the conical part 68 of the stop valve 63 is disposed in the large-diameter hole part 65 of the air exhaust hole 62.

The air exhaust mechanism 61 in such a structure is brought into a state that the material reservoir 46 and the cavity part 31 are closed with respect to the outside of the mold body 26 as illustrated in Fig. 9B in a closed state of the stop valve 63 in which the conical part 68 of the stop valve 63 is in contact with the inclined surface 64 of the air exhaust hole 62. On the other hand, the air exhaust mechanism 61 is brought into a state that the material reservoir 46 and the cavity part 31 are opened with respect to the outside of the mold body 26 as illustrated in Fig. 9A in an open state of the stop valve 63 in which the conical part 68 of the stop valve 63 is separated from the inclined surface 64 of the air exhaust hole 62.

In other words, until the state immediately before the casting material 48 is filled in the cavity part 31 and the material reservoir 46, the stop vale 63 is pushed down in the arrow Z2 direction by its self-weight into its open state as illustrated in Fig. 9A. This makes it possible to easily release the air remaining in the cavity part 31 and the material reservoir 46 to the outside of the mold body 26 via the air exhaust hole 62.

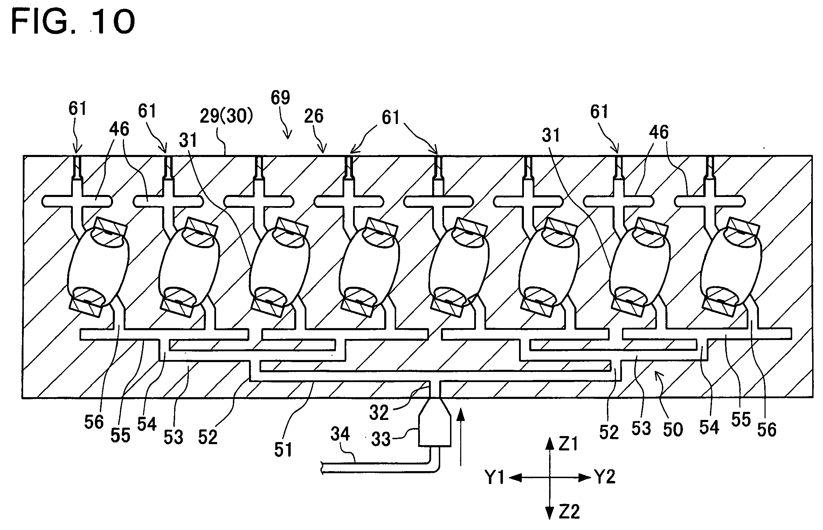

On the other hand, in the state that the casting material 48 has been filled in the cavity part 31 and the material reservoir 46, the stop valve 63 is pushed up in the arrow Z1 direction by the pressure force in the filling of the casting material 48 into its closed state as illustrated in Fig. 9B. In this case, the air exhaust hole 62 is closed, thus preventing leakage and the like of the casting material 48. Further, it is also possible here to structure a casting mold 69 in which the air exhaust mechanism 61 is added to the above-described casting mold 58 in the second embodiment as illustrated in Fig. 10.

Accordingly, evacuation of the air in the cavity parts 31 can be effectively performed while suppressing leakage in filling of the casting material 48 in the casting molds 60, 69 of this embodiment. This makes it possible to suppress occurrence of voids causing a decrease in electric insulating performance of the insulating spacers 3 (cast products) and also increase the filling performance of the casting material 48 into the cavity parts 31. Therefore, cast products stable in various characteristics can be obtained.

### (Fourth Embodiment)

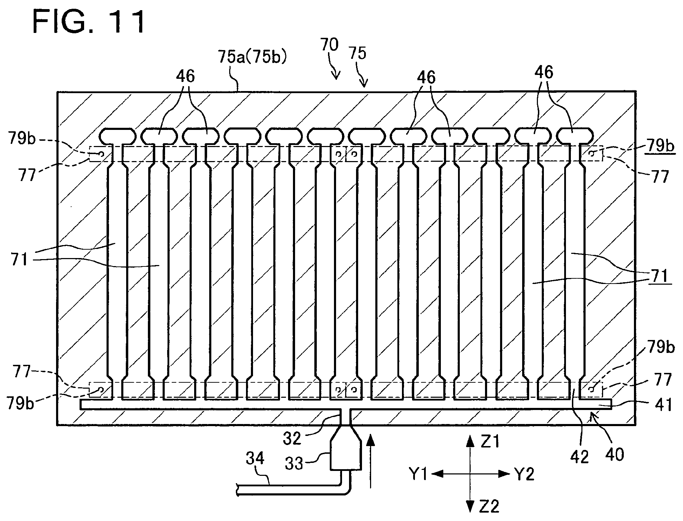

Next, a fourth embodiment will be described based on Fig. 11 to Fig. 13. Note that components in Fig. 11 to Fig. 13 which are the same as those in Fig. 5 and Fig. 8 described in the first and third embodiments are given the same numbers and description thereof will be omitted.

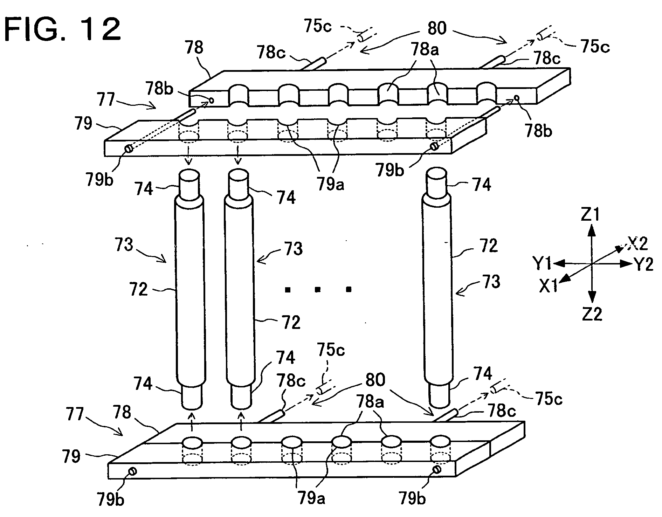

A casting mold 70 of this embodiment can cast pole-shaped insulating spacers 73 which are entirely formed of only a casting material without embedded metal fittings as illustrated in Fig. 11 and Fig. 12 in place of the post-shaped insulating spacers 73 integrally cast together with the embedded metal fittings 7, 8 by the casting mold 25 in the first embodiment. The insulating spacer 73 has a stepped shaft shape and includes a spacer body part 72 and small-diameter parts 74 having a diameter smaller than that of the spacer body part 72 and formed at both end portions of the spacer body part 72. This pole-shaped insulating spacer 73 is also disposed as a solid insulator inside the gas insulated switchgear 1 illustrated in Fig. 1.

Specifically, the casting mold 70 of this embodiment includes a mold body 75 and four inserts 77, in place of the mold body 26 and the inserts 27,28 included in the casting mold 25 described in the first embodiment, and an insert fixing mechanism 80. The mold body 75 has a fixed mold part 75b and a movable mold part 75a movable in an arrow X1-X2 direction. Further, in the mold body 75, a plurality of mold cavities 71 are formed in a manner that the positions thereof in the height direction in the mold body 75 are aligned with each other.

The individual inserts 77 integrally and detachably hold a plurality of spacers 73 (cast products) cast in the mold cavities 71 respectively. In other words, the inserts 77 are structured in a so-called two-piece structure including a movable insert part 78 detachably installed in the movable mold part 75a and a fixed insert part 79 inserted in the fixed mold part 75b with a space between them.

The movable insert part 78 and the fixed insert part 79 include a plurality of respective recessed portions 78a, 79a recessed in a semicylindrical shape. The individual small-diameter parts 74 at both ends of a plurality of insulating spacers 73 respectively cast in the mold cavities 71 are held to be sandwiched between the recessed portions 78a, 79a. In other words, by fastening screws 79b inserted into the fixed insert parts 79 to threaded holes 78b provided in the movable insert parts 78, the inserts 77 in which the fixed insert parts 79 and the movable insert parts 78 are integrally fastened are constructed.

Further, the casting mold 70 is provided with the insert fixing mechanism 80 detachably fixing the inserts 77 to one of the fixed mold part 75b and the movable mold part 75a. In this embodiment, a structure in which the inserts 77 are detachably fixed to the movable mold part 75a will be exemplified.

More specifically, a plurality of press-fit pins 78c are projectingly provided at the movable insert part 78, and the press-fit pins 78c are press-fitted (detachably fixed) via O-rings to pin press-fit holes 75c drilled in advance in the movable mold art 75a. On the other hand, recessed portions slightly larger in size than the outer shape of the fixed insert parts 79 are formed in the fixed mold part 75b, and the fixed insert parts 79 are inserted into the recessed portions in a non-press-fit state.

Accordingly, in the casting mold 70 of this embodiment, the inserts 77 made by integrally fastening the fixed insert parts 79 and the movable insert parts 78 are set (detachably fixed) in the movable mold part 75a to close the mold body 75 before casting of the insulating spacers 73 is started. After the casting of the insulating spacers 73, the movable insert parts 78 are moved backward in an arrow X2 direction to open the mold body 75. In this event, the small-diameter parts 74 of the insulating spacers 73 are held to be sandwiched between the recessed portions 78a, 79a and the movable insert parts 78 of the inserts 77 are fixed to the movable mold part 75a, so that the mold body 75 is opened with all of the cast products (the insulating spacers 73) fixed to the movable mold part 75a.

Thereafter, by separating the fixed insert parts 79 and the movable insert parts 78 in the inserts 77 removed from the movable mold part 75a into two parts by unfastening the screws 79b, a plurality of insulating spacers 73 as cast products can be taken out of the mold body 75 and the inserts 77.

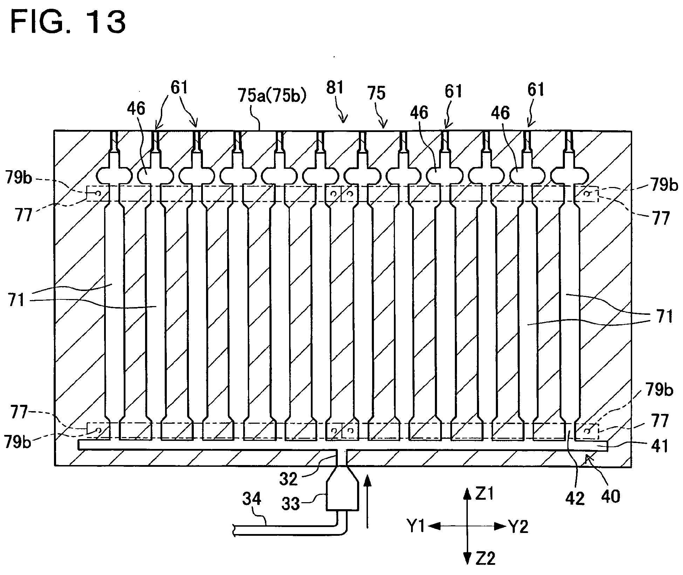

As described above, in the casting mold 70 of this embodiment, when the mold body 75 is opened after the casting, the insulating spacers 73 being cast products can be fixed to one of the fixed mold part 75b and the movable mold part 75a (the movable mold part 75a side in this embodiment). In addition, in the casting mold 70 of this embodiment, the individual cast insulating spacers 73 can be efficiently taken out via the inserts 77 in the two-piece structure. More specifically, with the casting mold 70, the insulating spacers 73 which are entirely formed of only the casting material without embedded metal fittings can be easily released from the mold, for example, without flaw. Note that as illustrated in Fig. 13, a casting mold 81 in which the air exhaust mechanism 61 of the third embodiment is added to the casting mold 70 of this embodiment may be structured.

An epoxy resin is exemplified as the thermosetting casting material, for example, in the above embodiments. In place of the epoxy resin, for example, a silicone resin made by combining a predetermined curing agent and a filler is also applicable.

While certain embodiments have been described, these embodiments have been presented by way of example only, and are not intended to limit the scope of the inventions as claimed. Indeed, the novel embodiments described herein may be embodied in a variety of other forms; furthermore, various omissions, substitutions and changes in the form of the embodiments described herein may be made without departing from the inventions as claimed. The accompanying claims are intended to cover such forms or modifications as would fall within the scope of the inventions as claimed.

## Claims

1. A casting mold (70), comprising:
a mold body (75) including, at a bottom portion thereof, a material injection port (32) for injecting a thermosetting casting material (48) under pressure; and
a plurality of mold cavities (71) arranged along the horizontal direction in the mold body (75), and respectively to be filled with the casting material (48) injected from the material injection port (32) at the bottom portion of the mold body (75);
wherein the mold body (75) has a fixed mold part (75b) and a movable mold part (75a), and
wherein the casting mold (70) is **characterized by**:
an insert (77) detachably fixed in the mold body (75), the insert (77) being configured to detachably hold a plurality of molded products (73) to be molded in the individual mold cavities (71) respectively; and
an insert fixing mechanism (80) configured to detachably fix the insert (77) to one of the fixed mold part (75b) and the movable mold part (75a).

2. The casting mold (25) according to claim 1, further comprising a heating mechanism (36) configured to heat the mold body (26) in a manner that a heating temperature becomes higher from the bottom portion toward an upper portion of the mold body (26).

## Patentansprüche

1. Gussform (70), die Folgendes umfasst:
einen Formkörper (75), der an einem unteren Abschnitt davon eine Materialeinspritzöffnung (32) zum Einspritzen eines warmhärtenden Gussmaterials (48) unter Druck umfasst; und
mehrere Formhohlräume (71), die entlang der horizontalen Richtung in dem Formkörper (75) angeordnet sind und jeweils mit dem von der Materialeinspritzöffnung (32) am unteren Abschnitt des Formkörpers (75) eingespritzten Gussmaterial (48) zu füllen sind;
wobei der Formkörper (75) einen festen Formteil (75b) und einen beweglichen Formteil (75a) aufweist, und
wobei die Gussform (70) durch Folgendes gekennzeichnet ist:
einen Einsatz (77), der lösbar im Formkörper (75) befestigt ist, wobei der Einsatz (77) ausgestaltet ist, um mehrere geformte Produkte (73), die jeweils in den einzelnen Formhohlräumen (71) zu formen sind, lösbar zu halten; und
einen Einsatzbefestigungsmechanismus (80), der ausgestaltet ist, um den Einsatz (77) lösbar an einem von dem festen Formteil (75b) und dem beweglichen Formteil (75a) zu befestigen.

2. Gussform (25) nach Anspruch 1, die ferner einen Heizmechanismus (36) umfasst, der ausgestaltet ist, um den Formkörper (26) derart zu erhitzen, dass eine Heiztemperatur von dem unteren Abschnitt in Richtung des oberen Abschnitts des Formkörpers (26) höher wird.

## Revendications

1. Moule de coulée (70), comprenant :
un corps de moule (75) comprenant, à une portion inférieure de celui-ci, un orifice d'injection de matériau (32) pour injecter un matériau de coulée thermodurcissable (48) sous pression ; et
une pluralité de cavités de moule (71) agencées dans le sens horizontal dans le corps de moule (75), et respectivement à remplir avec le matériau de coulée (48) injecté à partir de l'orifice d'injection de matériau (32) à la portion inférieure du corps de moule (75) ;
dans lequel le corps de moule (75) comprend une partie de moule fixe (75b) et une partie de moule mobile (75a), et
dans lequel le moule de coulée (70) est **caractérisé par** :
un insert (77) fixé, de manière détachable, dans le corps de moule (75), l'insert (77) étant configuré pour maintenir, de manière détachable, une pluralité de produits moulés (73) à mouler respectivement dans les cavités de moule individuelles (71) ; et
un mécanisme de fixation d'insert (80) configuré pour fixer, de manière détachable, l'insert (77) à l'une de la partie de moule fixe (75b) et de la partie de moule mobile (75a).

2. Moule de coulée (25) selon la revendication 1, comprenant en outre un mécanisme de chauffage (36) configuré pour chauffer le corps de moule (26) de telle manière qu'une température de chauffage devienne croissante de la portion inférieure vers une portion supérieure du corps de moule (26).
